# DEMANDE DE BREVET EUROPEEN

(11) **EP 1 741 625 A1**
(43) Date de publication de la demande: **10.01.2007**
(21) Numéro de dépôt: 06291058.3
(22) Date de dépôt: 27.06.2006
(51) Int. Cl.: B63B 17/00, B63B 7/08, F16B 2/10

(54) **Dispositif pour la fixation d'objets sur un boudin de bateau gonflable**

(30) Priorité: 05.07.2005 FR 0507096
(71) Demandeur: Amiaud, Franck, 85280 La Ferriere (FR)
(72) Inventeur: Amiaud, Franck, 85280 La Ferriere (FR)
(74) Mandataire: Bonnetat, Christian

(57) **Abrégé**

- Dispositif pour la fixation d'objets sur un boudin de bateau gonflable.
- Selon l'invention, le dispositif comporte une pince (1) à deux branches courbes (2, 3) articulées pouvant prendre :
■ soit au moins une première position, dans laquelle les branches (2, 3) de la pince (1) sont écartées l'une de l'autre de façon que la distance séparant les extrémités libres desdites branches est au moins égale au diamètre du boudin gonflé ;
■ soit une deuxième position, dans laquelle les branches (2, 3) de la pince (1) sont rapprochées l'une de l'autre en enserrant ledit boudin gonflé (6), qu'elles pressent entre elles.

## Description

La présente invention concerne un dispositif pour la fixation d'objets sur un boudin gonflé de bateau gonflable.

On sait que les bateaux gonflables comportent un boudin périphérique, généralement subdivisé en plusieurs chambres étanches indépendantes. Du fait qu'un tel boudin présente une section sensiblement circulaire, tout objet posé dessus a tendance à glisser sans pouvoir y rester. Or, il est intéressant de pouvoir fixer en position sur le boudin un certain nombre d'objets, comme par exemple un dispositif GPS, un échosondeur, une poulie pour câble d'ancre, un enrouleur de câble ou de ligne, un porte-bouteille, etc ... et, plus spécialement pour les pêcheurs, des porte-cannes, des boîtes à leurres, etc ...

Par le document US-A-2 468 287, on connaît déjà un dispositif pour la fixation d'objets sur un boudin gonflé de bateau gonflable, comportant :
- une pince à deux branches courbes, disposées de façon que leurs concavités se trouvent en regard, les concavités desdites branches correspondant au moins approximativement à la convexité dudit boudin gonflé, et lesdites branches étant articulées l'une à l'autre par des moyens d'articulation dont l'axe est orthogonal au plan desdites branches ;
- des moyens de serrage desdites branches disposés au voisinage desdits moyens d'articulation et permettant auxdites branches de prendre au moins une première et une deuxième positions, telles que :
   - dans ladite première position, les branches de la pince sont écartées l'une de l'autre de façon que la distance séparant les extrémités libres desdites branches, opposées auxdits moyens d'articulation, est au moins égale au diamètre dudit boudin gonflé ; et
   - dans ladite deuxième position, les branches de la pince sont rapprochées l'une de l'autre en enserrant ledit boudin gonflé, qu'elles pressent entre elles ; et
- au moins une embase portée par au moins une desdites branches de la pince, du côté opposé à la concavité de ladite branche, et apte à servir de support à au moins un objet.

Ainsi, il est possible de fixer, par tout moyen connu, un ou plusieurs objets sur la ou les embases rendue(s) solidaire(s) dudit boudin par ladite pince.

Dans ce dispositif connu, lesdits moyens de serrage comportent une came rotative de serrage. Il en résulte que lesdits moyens de serrage ne peuvent fixer correctement la pince sur le boudin si celui-ci est quelque peu dégonflé. Inversement, si le boudin est trop gonflé, non seulement la fermeture des moyens de serrage est malaisée, mais encore lesdits moyens de serrage risquent de s'ouvrir spontanément par écartement élastique.

La présente invention a pour objet de résoudre ce problème.

A cette fin, selon l'invention, le dispositif pour la fixation d'objets sur un boudin gonflé de bateau gonflable du type décrit ci-dessus est remarquable en ce que lesdits moyens d'articulation sont disposés sur des prolongements extérieurs saillants desdites branches et en ce que lesdits moyens de serrage sont montés sur lesdits prolongements.

Ainsi, par commande desdits moyens de serrage, il est possible d'adapter précisément le serrage au diamètre (et donc au gonflage) du boudin.

Avantageusement, lesdits moyens de serrage sont du type à vis et écrou.

Dans un mode de réalisation particulièrement simple et avantageux, lesdits moyens de serrage comportent une vis fixée à l'un desdits prolongements extérieurs et traversant l'autre desdits prolongements extérieurs par une ouverture oblongue longitudinale.

Par ailleurs, la branche de ladite pince se trouvant à l'intérieur dudit bateau, après fixation dudit dispositif sur le boudin gonflé, peut comporter au moins une embase de support au moins approximativement verticale. De même, la branche de ladite pince se trouvant à l'extérieur du bateau, après fixation dudit dispositif sur le boudin gonflé, peut comporter au moins une embase de support au moins approximativement horizontale.

Pour fixer la position de la pince sur le boudin, aussi bien longitudinalement qu'en rotation, on peut prévoir sur l'une des branches des moyens, par exemple du type fourchette, coopérant avec une butée, par exemple un téton à la forme au moins approximative d'un champignon, fixée sur ledit boudin. Une telle butée peut être fixée d'origine sur le boudin, par exemple pour servir de bitte, ou bien être rapportée par collage, spécialement pour la coopération avec ladite fourchette.

Notamment dans le cas d'objets de grande longueur, il est possible d'utiliser un système comportant au moins deux dispositifs de fixation tels que spécifiés ci-dessus pour les fixer au boudin. Les dispositifs de fixation composant un tel système peuvent alors se trouver sur un même bord dudit bateau gonflable ou bien sur des bords opposés de ce dernier.

Les figures du dessin annexé feront bien comprendre comment l'invention peut être réalisée. Sur ces figures, des références identiques désignent des éléments semblables.
La figure 1 montre en plan un exemple de réalisation du dispositif de fixation selon l'invention.
La figure 2 montre un détail selon la flèche II de la figure 1.
La figure 3 montre un détail selon la flèche III de la figure 1.
La figure 4 illustre, en perspective du dessous, les moyens d'articulation et les moyens de serrage du dispositif de fixation des figures 1 à 3.
Les figures 5A et 5B illustrent schématiquement la mise en place du dispositif de fixation selon l'invention sur un boudin gonflé d'un bateau gonflable.
La figure 6 montre, en perspective du dessus, la partie supérieure du dispositif de fixation selon l'invention monté sur un boudin gonflé dudit bateau.
La figure 7 illustre, en perspective du dessus, un système selon l'invention comportant deux dispositifs de fixation, tels que représentés sur les figures 1 à 6.

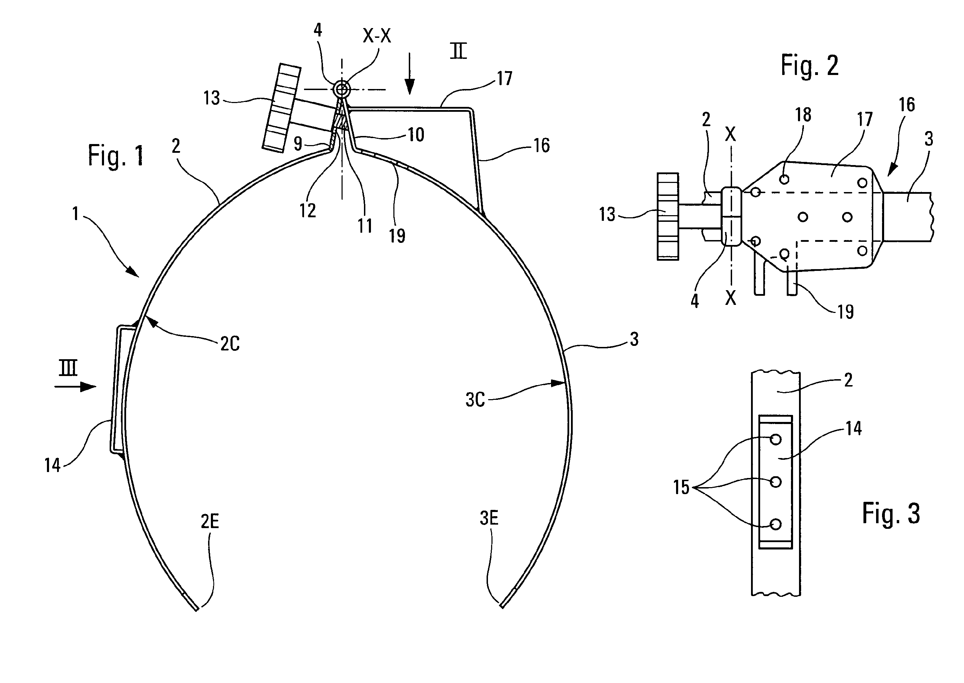

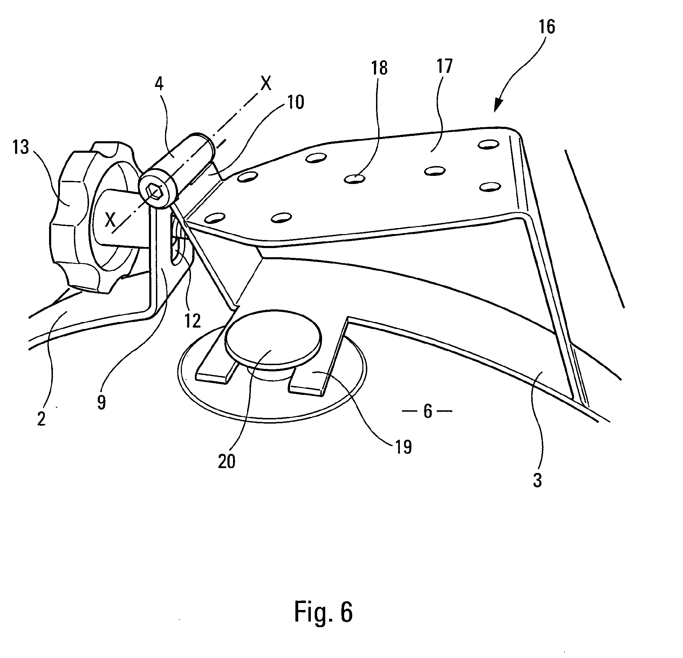

Le dispositif pour la fixation d'objets sur un boudin gonflé de bateau gonflable, représenté à titre d'exemple de réalisation sur les figures 1 à 6, comporte une pince 1 à deux branches courbes 2 et 3, articulées l'une à l'autre par une articulation 4, dont l'axe X-X est orthogonal au plan desdites branches 2 et 3. Les branches courbes 2 et 3 sont disposées de façon que leurs concavités 2C et 3C se trouvent en regard.

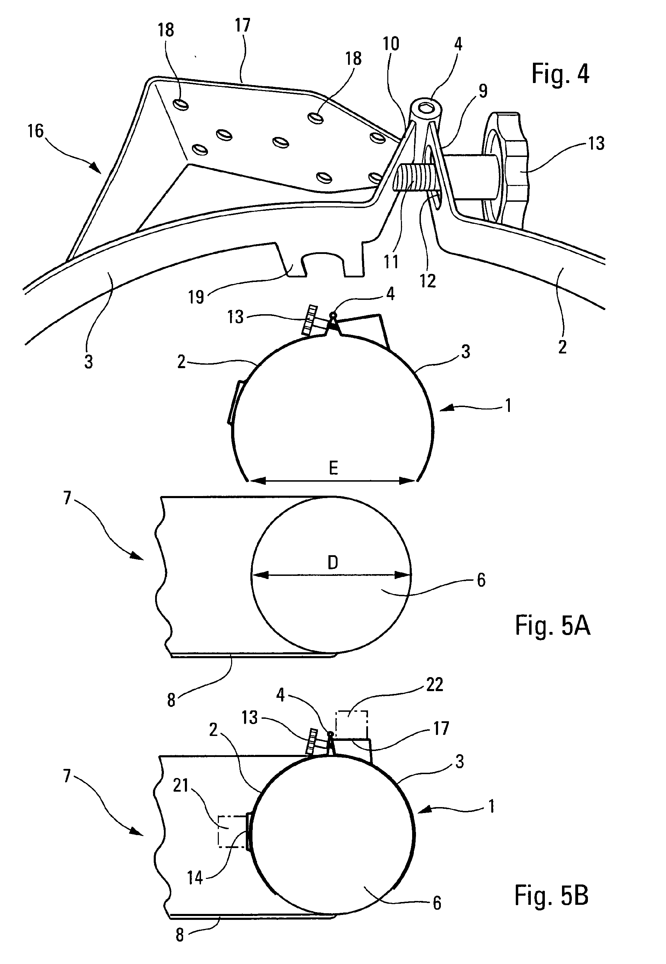

La pince 1 est destinée, comme on le verra ci-après en regard des figures 5A et 5B, à être montée sur un boudin gonflé 6 d'un bateau gonflable 7, représenté seulement schématiquement et partiellement sur lesdites figures. De façon usuelle, ledit boudin 6 se trouve à la périphérie du bateau 7 et le fond souple 8 de ce dernier est relié de façon étanche à la partie inférieure dudit boudin.

Les concavités 2C et 3C desdites branches 2 et 3 correspondent au moins approximativement à la convexité du boudin 6 correctement gonflé.

L'articulation 4 est montée sur des prolongements extérieurs saillants 9 et 10 des branches 2 et 3, respectivement.

De plus, sur le prolongement extérieur saillant 10 de la branche 3 est soudée une vis inclinée 11, traversant le prolongement extérieur saillant 9 de la branche 2 par une ouverture oblongue longitudinale 12. Un bouton fileté 13, disposé du côté du prolongement 9 opposé au prolongement 10, peut se visser et se dévisser sur la vis 11. Grâce au bouton fileté 13, il est possible de régler l'écartement des branches 2 et 3 par rotation autour de l'axe X-X de l'articulation 4.

Par ailleurs, la branche 2 de la pince 1 comporte, approximativement en son milieu, une embase 14 tangentielle, pourvue de trous 15. La branche 3, quant à elle, comporte une équerre 16 solidaire, d'un côté, de ladite branche 3 et, de l'autre, dudit prolongement 10 pour former une embase 17, de direction transversale à l'embase 14 et percée de trous 18.

De plus, l'une desdites branches 2 ou 3 comporte une fourchette latéralement saillante 19.

Ainsi, pour mettre en place la pince 1 sur le boudin gonflé 6, on commence par dévisser le bouton fileté 13 jusqu'à ce que l'écartement E des extrémités libres 2E et 3E (opposées à l'articulation 4) soit au moins égal au diamètre D du boudin gonflé 6. On peut ainsi introduire, par le dessus, la pince 1 sur ledit boudin, de façon que les branches 2 et 3 soient respectivement à l'intérieur et à l'extérieur du bateau 7 et que l'articulation 4 se trouve sur la partie supérieure dudit boudin. Après quoi, on visse le bouton fileté 13 pour serrer lesdites branches 2 et 3 jusqu'à ce qu'elles enserrent extérieurement le boudin 6 en le pressant entre elles (voir les figures 5A et 5B). On comprendra aisément que, dans le cas d'un sous-gonflage ou d'un surgonflage du boudin 6, le dispositif selon l'invention s'adapte au diamètre correspondant de ce dernier, par l'action du bouton fileté 13, pour assurer une fixation correcte.

Dans cette position de fixation, les embases 14 et 17 sont, par exemple, respectivement verticale et horizontale et la fourchette 19 est engagée dans un téton 20, en forme de champignon, solidaire du boudin 6. Ainsi, la position de la pince 1 est fixée, sur le boudin 6, aussi bien longitudinalement qu'en rotation.

On comprendra aisément que, grâce aux trous 15 et 18, il est aisé de fixer, par tous moyens connus, des objets 21, 22 sur lesdites embases 14 et 17.

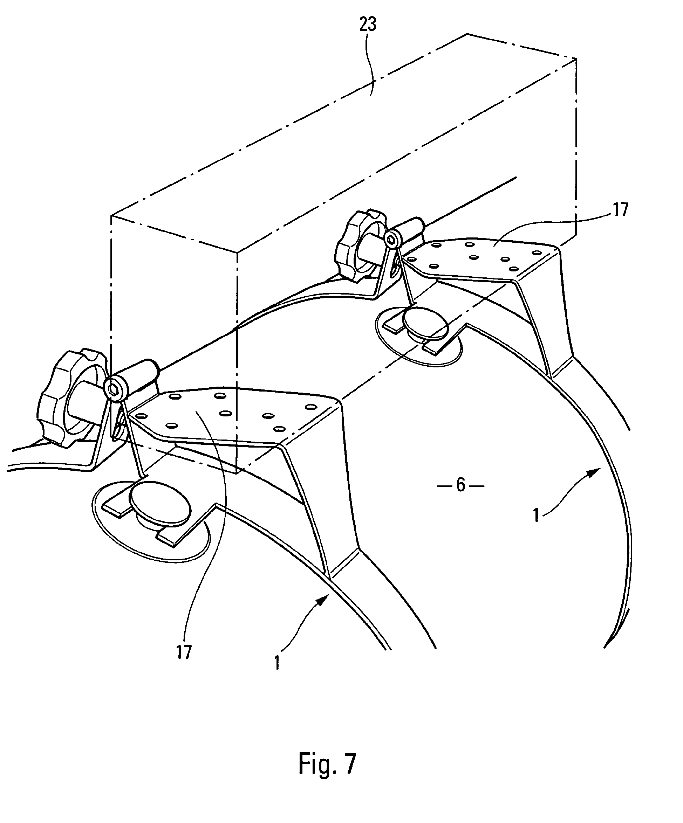

Comme illustré sur la figure 7, dans le cas où on désirerait fixer sur le boudin 6 un objet 23 de grande dimension, il est possible d'utiliser deux pinces 1 écartées, l'objet 23 étant fixé sur des embases alignées 14, 17 desdites pinces.

Bien que sur la figure 7, on ait représenté les deux pinces 1 fixées sur le même bord du bateau 7, il va de soi que lesdites pinces pourraient être fixées sur des bords opposés dudit bateau 7.

Les pinces 1 conformes à la présente invention peuvent être réalisées en métal (par exemple acier inoxydable, aluminium, etc ...), en matière plastique, etc ... Eventuellement, les branches 2 et 3 desdits pinces 1 peuvent porter au moins partiellement un revêtement plastique pour protéger le boudin 6 contre d'éventuels endommagements ou usures.

## Revendications

1. Dispositif pour la fixation d'objets (21, 22, 23) sur un boudin gonflé (6) de bateau gonflable(7), comportant :
- une pince (1) à deux branches courbes (2, 3), disposées de façon que leurs concavités (2C, 3C) se trouvent en regard, les concavités desdites branches correspondant au moins approximativement à la convexité dudit boudin gonflé (6), et lesdites branches étant articulées l'une à l'autre par des moyens d'articulation (4) dont l'axe (X-X) est orthogonal au plan desdites branches ;
- des moyens de serrage (11, 12, 13) desdites branches (2, 3) disposés au voisinage desdits moyens d'articulation (4) et permettant auxdites branches de prendre au moins une première et une deuxième positions, telles que :
• dans ladite première position, les branches (2, 3) de la pince (1) sont écartées l'une de l'autre de façon que la distance (E) séparant les extrémités libres (2E, 3E) desdites branches, opposées auxdits moyens d'articulation (4), est au moins égale au diamètre (D) dudit boudin gonflé (6) ; et
• dans ladite deuxième position, les branches (2, 3) de la pince (1) sont rapprochées l'une de l'autre en enserrant ledit boudin gonflé (6), qu'elles pressent entre elles ; et
- au moins une embase (14, 17) portée par au moins une desdites branches (2, 3) de la pince, du côté opposé à la concavité de ladite branche, et apte à servir de support à au moins un objet,
**caractérisé en ce que** lesdits moyens d'articulation (4) sont disposés sur des prolongements extérieurs saillants (9, 10) desdites branches et **en ce que** lesdits moyens de serrage (11, 12, 13) sont montés sur lesdits prolongements.

2. Dispositif selon la revendication 1,
**caractérisé en ce que** lesdits moyens de serrage (11, 12, 13) sont du type à vis et écrou.

3. Dispositif selon la revendication 2,
**caractérisé en ce que** lesdits moyens de serrage comportent une vis (11) fixée à l'un desdits prolongements extérieurs (10) et traversant l'autre (9) desdits prolongements extérieurs par une ouverture oblongue longitudinale (12).

4. Dispositif selon l'une des revendications 1 à 3,
**caractérisé en ce que** la branche (2) de ladite pince se trouvant à l'intérieur dudit bateau (7), après fixation dudit dispositif sur le boudin gonflé, comporte au moins une embase de support (14) au moins approximativement verticale.

5. Dispositif selon l'une des revendications 1 à 4,
**caractérisé en ce que** la branche (3) de ladite pince se trouvant à l'extérieur du bateau (7), après fixation dudit dispositif sur le boudin gonflé, comporte au moins une embase de support (17) au moins approximativement horizontale.

6. Dispositif selon l'une des revendications 1 à 5,
**caractérisé en ce que** l'une des branches (3) de ladite pince comporte des moyens (19) aptes à coopérer avec une butée (20) fixée sur ledit boudin, pour fixer la position de ladite pince sur ce dernier.

7. Dispositif selon la revendication 6,
**caractérisé en ce que** lesdits moyens de fixation de la pince en position se présentent sous la forme d'une fourchette (19), alors que ladite butée est un téton (20) à la forme au moins approximative d'un champignon.

8. Système pour la fixation d'objets sur un boudin gonflé de bateau gonflable,
**caractérisé en ce qu'**il comporte au moins deux dispositifs de fixation (1) tels que spécifiés selon l'une des revendications 1 à 7, au moins un objet (23) étant porté par des embases alignées (17) de dispositifs de fixation différents.

9. Système selon la revendication 8,
**caractérisé en ce que** lesdits dispositifs de fixation (1) se trouvent sur un même bord dudit bateau gonflable.

10. Système selon la revendication 8,
**caractérisé en ce que** lesdits dispositifs de fixation (1) se trouvent respectivement sur des bords opposés dudit bateau gonflable.
